# EUROPEAN PATENT SPECIFICATION

(11) **EP 2 293 512 B1**
(45) Date of publication and mention of the grant of the patent: **06.01.2016**
(21) Application number: 09169278.0
(22) Date of filing: 02.09.2009
(51) Int. Cl.: H04L 29/06

(54) **MALICIOUS COMMUNICATION REJECTION**
ABWEISEN BÖSWILLIGER KOMMUNIKATION
REJET DE COMMUNICATIONS MALVEILLANTES

(43) Date of publication of application: 09.03.2011
(73) Proprietor: Telefonaktiebolaget L M Ericsson (publ), 164 83 Stockholm (SE)
(72) Inventor: Rabbani, Farooq, Birmingham B20 3LE West Midlands (GB)
(74) Representative: Lind, Robert

(56) References cited:
- ROHWER T ET AL: "TNG White Paper: Abwehr von Spam over Internet Telephony (SPIT-AL)" INTERNET CITATION, [Online] XP007902521 Retrieved from the Internet: URL:http://www.spit-abwehr.de/Whitepaper_S PITAL_20060310.pdf> [retrieved on 2007-06-15]
- NICCOLINI S TARTARELLI M STIEMERLING NEC S SRIVASTAVA NORTEL NETWORKS S: "SIP Extensions for SPIT identification; draft-niccolini-sipping-feedb ack-spit-01.txt" IETF STANDARD-WORKING-DRAFT, INTERNET ENGINEERING TASK FORCE, IETF, CH, no. 1, 1 February 2006 (2006-02-01), XP015045814 ISSN: 0000-0004
- "3rd Generation Partnership Project;Technical Specification Group Core Network and Terminals;Telecommunications and Internet converged Services and Protocols for Advanced Networking (TISPAN); PSTN/ISDN simulation services: Anonymous Communication Rejection (ACR) and Communication Barring (CB); Protoc" 3GPP DRAFT; 24611-132, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Puerto Vallarta, Mexico; 20080205, 5 February 2008 (2008-02-05), XP050027405

## Description

### Technical field

The present invention relates to malicious communication rejection and in particular to the handling of malicious communication rejection within an IP Multimedia Subsystem core network.

### Background

Internet Protocol (IP) Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

The UMTS (Universal Mobile Telecommunications System) is a third generation wireless system designed to provide higher data rates and enhanced services to subscribers. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packet switched transmissions well beyond the 64 kbps limit of ISDN through the GSM call network, which is a necessity for UMTS data transmission rates of up to 2 Mbps. UMTS is standardised by the 3rd Generation Partnership Project (3GPP) which is a conglomeration of regional standards bodies such as the European Telecommunication Standards Institute (ETSI), the Association of Radio Industry Businesses (ARIB) and others. See 3GPP TS 23.002 for more details. The so-called Long Term Evolution (LTE) is being developed as a successor to UMTS by 3GPP. It is hoped that LTE will increase data rates greatly, for example to 100 Mbps.

The 3G (UMTS/LTE) architectures includes a subsystem known as the IP Multimedia Subsystem (IMS) for supporting traditional telephony as well as new IP multimedia services (3GPP TS 22.228, TS 23.228, TS 24.229, TS 29.228, TS 29.229, TS 29.328 and TS 29.329 Releases 5 to 9). Security functions for IMS are specified mainly in TS 33.203, but also in TS 33.178. IMS provides key features to enrich the end-user person-to-person communication experience through the use of standardised IMS Service Enablers, which facilitate new rich person-to-person (client-to-client) communication services as well as person-to-content (client-to-server) services over IP-based networks. One of the services already specified for the IMS is a multimedia telephony service (MMTel) for facilitating voice and video connections. Other IMS services that have or are being specified include Push-to-talk over Cellular, and Presence.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS.

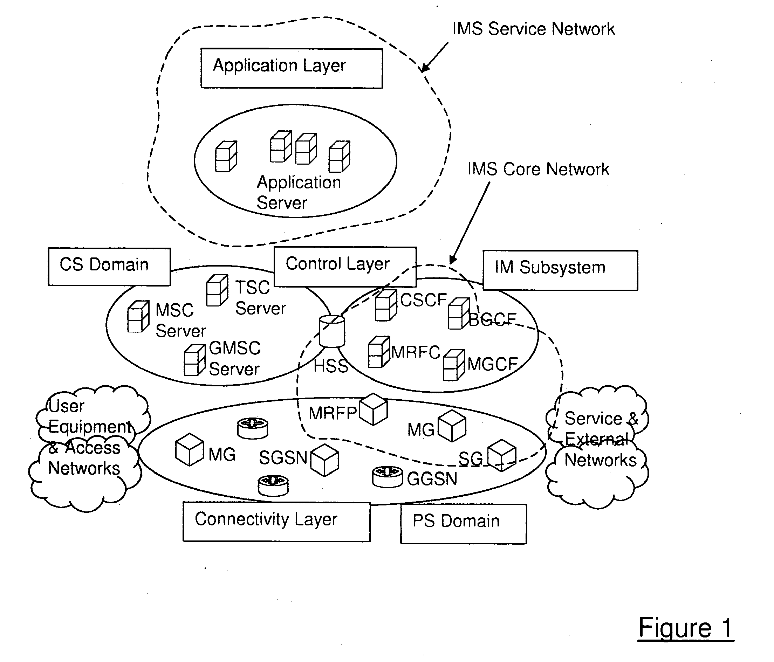

Whilst IMS has been established with UMTS/LTE access in mind, i.e. where users access the IMS services via UMTS cellular networks, IMS is intended to be used with a variety of access network technologies including technologies defined outside 3GPP. As such, a user can connect to an IMS network in a number of different ways, all of which use the Internet Protocol (IP). Terminals implementing IMS clients (such as mobile phones, personal digital assistants, computers, and Home IMS Gateways) can register directly on an IMS network, even when they are roaming in another network. The only requirement is that they can use IPv4/IPv6 and run Session Initiation Protocol (SIP) user agents. Fixed access (e.g., Digital Subscriber Line (DSL), cable modems, PON, Ethernet), mobile access (e.g. CDMA2000, GSM, GPRS, LTE) and wireless access (e.g. WLAN, WiMAX) are all supported. Other phone systems like plain old telephone service (POTS), H.323 and non IMS-compatible Voice over IP (VoIP) systems, may be supported through gateways. Figure 1 illustrates schematically a network architecture designed around the IMS.

In designing and configuring IMS services and networks, account must be taken of the requirements of governmental and inter-governmental regulatory bodies. In particular, services and networks must satisfy certain legal requirements. For example, in some countries it is a requirement that a network operator maintain records of incoming communications for each subscriber. This provided for in IMS by the Malicious Communication Identification (MCID) service, 3GPP TS 24.616. As stated in this TS:
"The MCID service will store session related information of incoming communications independent of the service requested. The following communication information shall be registered:
   - Destination Party Identity Information;
   - originating Party Identity Information; and
   - local time and date of the invocation in the network serving the called user.
The communication information shall not be available to the terminal equipment under the control of the called user nor the originating user. The communication information shall be stored at a location(s) under the control of the network operator."

MCID will allow authorities to trace malicious calls with a view to tracking down the perpetrators. MCID in itself does not provide a mechanism for barring incoming calls to a given user from a malicious or suspect caller, e.g. using a blacklist or the like. To achieve this, a further malicious communication rejection (MCR) service must be specified for the IMS. Any such MCR service should, as far as possible, be compatible with legacy networks and terminals where these make use of the IMS Core Network to facilitate the provision of services. Indeed, such support for legacy equipment may be a legal requirement.

"TNG White Paper: Abwehr von Spam over Internet Telephony (SPIT-AL)", Rohwer et al, discloses a prototype for a legally compliant and privacy friendly SPIT filtering reachability management system.

"SIP extensions for SPIT identification", S. Niccolini et al, discloses possible solutions to send feedback information using the SIP protocol for the scope of SPIT.

### Summary

It is an object of the present invention to provide a mechanism for creating and managing a malicious connection rejection blacklist which is compatible with both user equipment comprising an IMS client and legacy terminals. This object is achieved by maintaining within the IMS network and for each user, an incoming call history including caller identities. A user may add caller identities to his/her blacklist merely by identifying a call history position.

According to a first aspect of the present invention there is provided an application server configured for use in a malicious communication identification service (MCID) of an IP Multimedia Subsystem network, the application server configured for use in provisioning a service to a set of served users. The application server comprises a memory configured to store, for each of said served users, a calling party identity for each of a plurality of recently received incoming communication connection requests directed to the served user, the identities forming a connection history list ordered chronologically according to the time of the respective requests. The server further comprises a receiver for receiving from served users and/or from a gateway or gateways providing an interface between served users and the IP Multimedia Subsystem network, Session Initiation Protocol, SIP, messages each relating to a served user and containing a position within the connection history list for the served user, and a determining unit for determining, for each said message, the calling party identity at said position, said calling party to be added to a malicious connection rejection blacklist.

Embodiments of the invention make possible the provision of a malicious call rejection service to users possessing legacy terminals, that is terminals that do not possess an IMS client.

The memory of the application server may be further configured to store, for each of said served users, a connection blocking list containing caller identities from which incoming connection requests to the served user are to be blocked, the application server further comprising a connection blocking list manager responsive to an identification of a calling party identity by said receiver to add that identity to the connection blocking list stored for the associated served user.

In an embodiment of the invention determining unit is configured to identify within a received SIP message a Supplementary Service Codes (SSC) command including, as an index, said position. In this case, said SIP message may be a SIP INVITE message.

In an alternative embodiment said determining unit may be configured to identify within a received SIP message an XML MIME component containing said position. In this case, said SIP message may be a SIP INFO message. Of course, both of these embodiments may be implemented within the same application server.

A particular use case of the application server is to the MMTel IMS service, where the application server is an MMTel application server.

According to a second aspect of the invention there is provided a user terminal configured for use in a malicious communication identification service (MCID) for use with an IP Multimedia Subsystem network. The terminal comprises an IP Multimedia Subsystem client configured to construct a Session Initiation Protocol message including a position within a connection history list of the user terminal, the connection history list being a chronologically ordered record of incoming connection requests. The terminal is further configured to send the Session Initiation Protocol request to said IP Multimedia Subsystem network to allow the network to determine a caller identity associated with the identified incoming connection request, said calling party to be added to a malicious connection rejection blacklist.

The IP Multimedia Subsystem client may be configured to identify said position within the Session Initiation Protocol message by including the position as a Supplementary Services Code command or within an XML MIME. The Session Initiation Protocol message itself may be an INVITE message in the case that the message is constructed and sent while no connection is ongoing, and an INFO message in the case that a connection is ongoing.

According to a third aspect of the present invention there is provided a method of enabling served users to identify caller identities to an application server configured for use in a malicious communication identification service (MCID) of an IP Multimedia Subsystem network. The method comprises storing at the application server, for each of said served users, a calling party identity for each of a plurality of recently received incoming communication connection requests directed to the served user, the identities forming a connection history list ordered chronologically according to the time of the respective requests. The method further comprises receiving at the application server, from served users and/or from a gateway or gateways providing an interface between served users and the IP Multimedia Subsystem network, Session Initiation Protocol, SIP, messages each relating to a served user and containing a position within the connection history list for the served user and, at the application server, determining for each said message the calling party identity at said position, said calling party to be added to a malicious connection rejection blacklist.

The method may further comprise, at a user terminal of a served user, sending a Supplementary Services Codes command, containing a said position for the served user to a gateway node of the IP Multimedia Subsystem network, at the gateway node, including the Supplementary Services Codes command as a payload in a SIP INVITE message, and sending the SIP INVITE message to said application server. The SIP messages may be either SIP INVITE messages or SIP INFO messages.

There is provided a method of managing communications barring lists for respective served users at an application server configured for use in a malicious communication identification service (MCID) of an IP Multimedia Subsystem network. The method comprises using the method set out above to identify a caller identity to be added to and/or deleted from a communications barring list of a served user.

The method being an extension of the IP Multimedia Subsystem Incoming Communications Barring service.

There is provided a computer configured to act as gateway between a non-Session Initiation Protocol, SIP, access network and an IP Multimedia Subsystem network in order to allow user terminals attached to said access network to participate in IP Multimedia Subsystem enabled services. The computer comprises a receiver for receiving from user terminals, messages configured according to access network protocols and each message containing a position within a connection history list of the sending user terminal, the connection history list being a chronologically ordered record of incoming connection requests. The computer further comprises a converter for converting each received message into a SIP message whilst preserving the position contained within the received message, and a sender for sending the converted SIP messages to an application server of the IP Multimedia Subsystem network.

If a message received from a user terminal is a SAM message containing an SIC command including said position, the converter may be configured to convert the message into a SIP INVITE message.

### Brief description of the drawings

Figure 1 illustrates schematically an IMS network overlayed on a communications system including PS and CS access networks;
Figure 2 illustrates a procedure for storing, at an IMS AS, a caller identity associated with an incoming call for a served user;
Figure 3 illustrates schematically various interfaces within the IMS, as well as a set of access networks;
Figure 4 illustrates a procedure for adding a caller identity to an MCR black list following completion of a call in the case of a served user possessing an IMS client;
Figure 5 illustrates a procedure for adding a caller identity to an MCR black list during an ongoing call in the case of a served user possessing an IMS client;
Figure 6 illustrates a procedure for adding a caller identity to an MCR black list following completion of a call in the case of a served user making use of a CS access network;
Figure 7 illustrates schematically an Application Server and a User Equipment for use with the procedures of Figures 4 and 5;
Figure 8 illustrates schematically a computer configured to operate as a gateway server for providing access for legacy terminals to I MS services; and
Figures 9a and 9b are flow diagrams illustrating steps for recording an incoming caller identity log on behalf of a served user, and for adding a caller identity from that log to an MCR blacklist.

### Detailed description

It is proposed here to introduce a new service into the IP Multimedia Subsystem (IMS) for handling the rejection of malicious calls. This service is referred to here as a "Malicious Connection Rejection" service or "MCR". MCR enables a served user to automatically reject previously marked incoming communications as malicious. A communication is considered to be malicious as soon as the originating identity is marked and registered in an incoming black-list by the served user. The incoming black-list contains the certified public identities (Tel URI IMPU/SIP URI Alias or the "name" SIP URI) of the malicious user. Malicious communications are rejected regardless of the current status (e.g. free or busy) of the served user.

As well as using the mechanisms described below for adding caller identities to a black-list, a served user who has the MCR service may have the possibility to manage his/her black-list via the Ut interface, at any time, from a web "self-care interface" (TS 183 023 XCAP over the Ut interface for Manipulating NGN PSTN/ISDN Simulation Services). As an alternative to, or in addition to, a black-list, a "grey-list" may be provided for similarly recording malicious caller identities. However, the grey-list may be partially accessible (or even not accessible at all) to the served user via the Ut interface. The use of a grey-list may be mandated by national laws.

3GPP has specified a Communication Barring (CB) service [3GPP TS 24.411 V8.1.0 Anonymous Communication Rejection (ACR) and Communication Barring (CB)]. The Communication Barring (CB) service offers the following subset of services:
- The Incoming Communications Barring (ICB) is a service that rejects incoming communications that fulfil certain provisioned or configured conditions on behalf of the terminating user.
- The Anonymous Communication Rejection (ACR) is a particular case of the ICB service, that allows barring of incoming communications from an anonymous originator on behalf of the terminating user.
- The Outgoing Communication Barring (OCB) is a service that rejects outgoing communications that fulfil certain provisioned or configured conditions on behalf of the originating user.

It is expected that the MCR service will be incorporated into the 3GPP CB standard, and will be a particular case of ICB. The Malicious Communication Rejection (MCR) service can be activated for a specific subscriber by configuring an ICB service barring rule within the *simserv.xsd* document (which represents a template or "schema" for configuring IMS supplementary services such as call barring) where the conditional part contains the "condition=malicious" and the action part "allow=false", i.e.:
<xs:element name="malicious" type="ss:empty-element-type"/>.

The inclusion of this rule within the *simserv.xsd* document, and therefore within "instances" of the schema, allows the MMTeI AS to mark caller identities included in the call barring as being malicious, further allowing the IMS operator to apply specific rules to those malicious caller identities. The relevant ETSI conditions are specified in TS 183 023 (XCAP over the Ut interface for Manipulating NGN PSTN/ISDN Simulation Services). When the ICB service rejects a communication as MCR, it sends an appropriate indication to the calling user.

The decision to place a caller identity in a black or grey list is agreed upon by prior arrangement between the served user and the operator. A served user may not place communications in a black list and also grey list. The MCR service applies to either a black list or grey list, not both at the same time.

To facilitate active management of the MCR black-list (to avoid repetition, reference here and below to a "black-list" is taken to encompass also reference to a grey-list) within the IMS network, communication details (i.e. P-Asserted-Identity) are captured on receipt of the "180 ringing" SIP response within the IMS, and are stored locally on an Application Server (AS), in this case an MMTeI AS. For each user, this AS maintains a pre-defined number of "stores", n, which store the caller identities for the n latest communication. The stores are updated in an oldest in, first out manner. For the purpose of illustration, store 0 is used to store the caller identity associated with the most recent call for a given user, whilst store n-1 stores the caller identity for the oldest logged call. The stores are available to a served user to enable that user to mark caller identities as malicious, thereby placing them in an incoming call baring black list or grey-list. The information captured and stored by the MCR service is the calling party identity which is taken from the P-Asserted-Identity header field of an incoming session initiation request. It will be appreciated that the P-Asserted Identity is a network verified and therefore trusted identity. If there is no P-Asserted-Identity, then the logged identity may be taken from the From header field of the incoming request. The n stores have a lifetime of the user's IMS registration. At expiration of Registration time or network de-registration (e.g. when a user switches his/her device off) the MCR stores are purged. Of course, the black-list itself will typically be stored in a persistent manner (e.g. on the HSS).

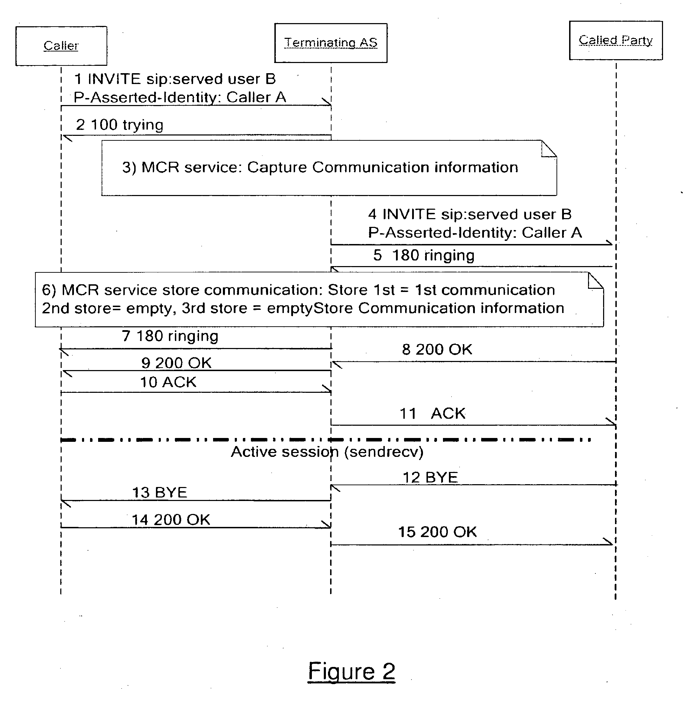

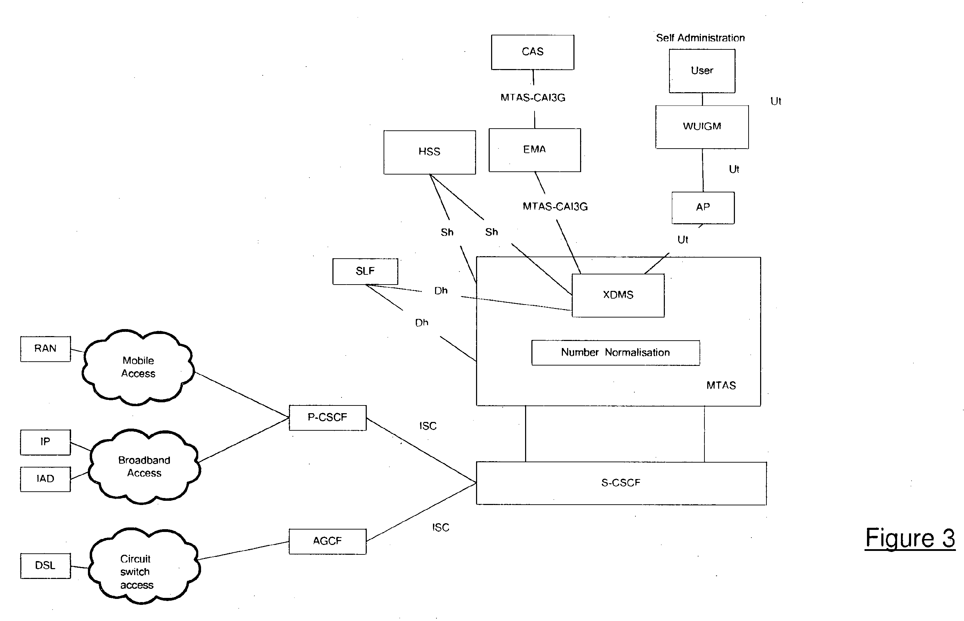

Figure 2 illustrates a process for establishing a communication session between a caller and a called party via the IMS. For simplicity, only these parties and the AS are shown. At step 6) of the process, following the return of the 180 ringing message to the AS, the AS automatically logs the caller identity in the *n*=0 store associated with the called party (assuming that this is a first call to be made to the called party). It will be appreciated that, where the called party's terminal does not comprise an IMS client, the 180 ringing, and other SIP responses, will be generated and delivered to the IMS network via an appropriate gateway node, e.g. an Access Gateway Control Function (AGCF) or a Media Gateway Control Function (MGCF). In some cases, e.g. where an ISDN user terminal is connected to a broadband access network via an Integrated Access Device (IAD), translation of terminal initiated messages (e.g. SS7 messages such as IAM) into SIP messages may be performed at a P-CSCF. An intermediate translation may also be performed at the IAD. Figure 3 illustrates schematically various access networks that may be used by users to access IMS services provided by a MMTeI Application Server (MTAS).

Marking of one of the last n communications as malicious may be achieved by an end user via the Supplementary Service Codes (SSC) command. ETS 300 738 [Human Factors (HF); Minimum Man-Machine Interface (MMI) to public network based supplementary services] defines the SSC code syntax and procedures. The format of the SSC command is operator specific. However the SSC command must have an "index" indicating the store to mark as malicious. By way of example, consider an MCR SSC code *57<lndex>. Assuming that there are three stores, i.e. n=3 , then the SSC codes for marking (registering) the caller identities logged in the stores would be as follows:
INVITE: tel:*571*#
Mark (register) the n=0 store as Malicious and add to CB black list or grey-list
INVITE: tel:*572*#
Mark (register) the *n*=1 store as Malicious and add to CB black list or grey-list
INVITE: tel:*573*#
Mark (register) the n=2 store as Malicious and add to CB black list or grey-list

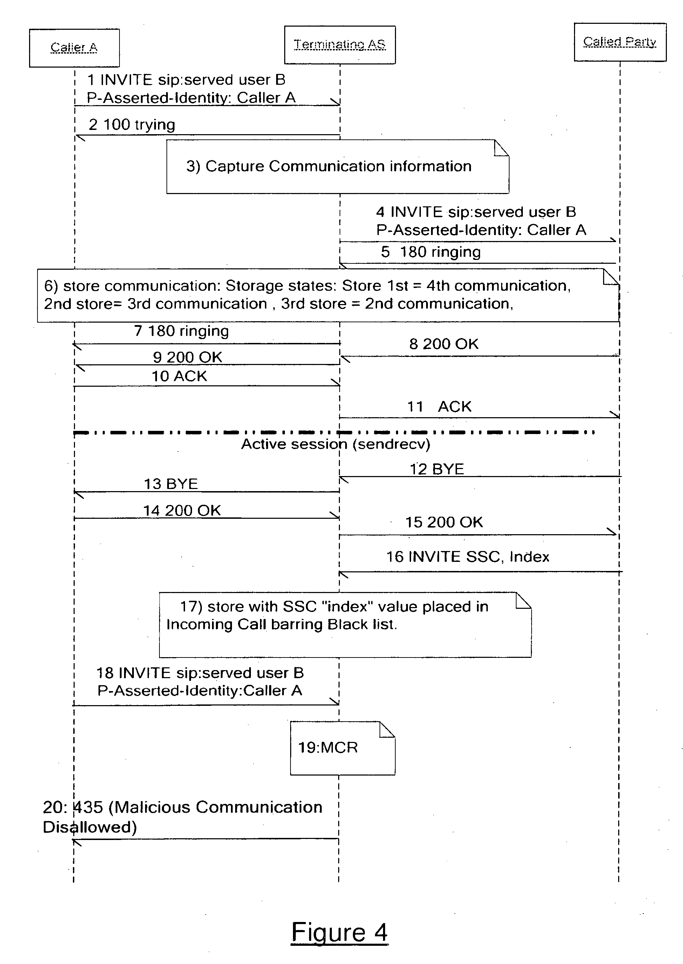

Figure 4 illustrates the process for marking a caller identity as malicious using the SCC command, again considering only the caller and the called party, and the AS, and assuming that both the caller and the called party terminals have IMS clients. Steps 1 to 15 illustrates the process of establishing and terminating the session. At step 6, the AS logs the caller identity in the called party's store, at position n=0. Following the termination of this call, the called party decides to mark the identity of that last caller as malicious. This involves the following steps:
16) After the communication has ended, the called party sends an SSC command with an "index" indicating a communication (n=0 to *n*-1) considered to be malicious.
17) The P-Asserted-Identity of Caller A is added to the served user's incoming baring black list or grey-list.
18) Caller A again makes an attempt at communication.
19) Caller A's identity is present in the incoming baring black-list or grey-list with condition element "malicious".
20) The communication is rejected with a SIP response 435 (a new response to be defined) and default reason phrase "Malicious Communication Disallowed". [Whilst a voice announcement indicating rejection to the caller may be played, this is not illustrated in the process of Figure 4.]

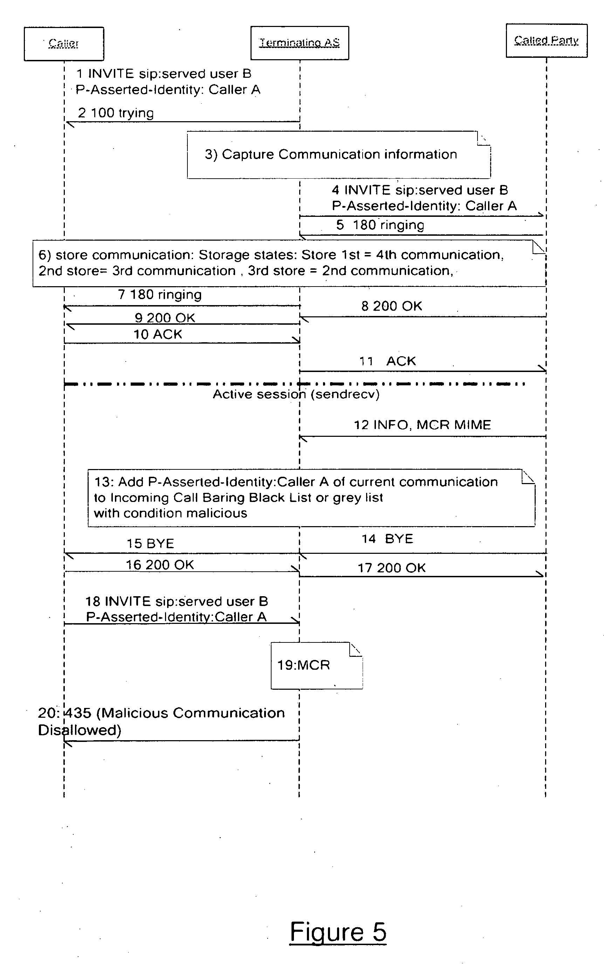

A served user may find it more convenient to mark a caller identity as malicious during an ongoing malicious call. This may be achieved via the SIP INFO method with an XML MIME as defined below. The *McrRequestlndicator* takes the value of the store the user requires to be marked as malicious, "0" indicating the latest or current communication. Figure 5 illustrates this process, showing in particular the following steps:
12) During an ongoing communication, the served user sends a SIP INFO method with the XML MIME containing *McrRequestlndicator* =0, to mark the current (latest) communication as malicious.
13) The P-Asserted-Identity of Caller A is added to the served user's incoming barring black-list.
18) After termination of the initial call, Caller A again makes an attempt at communication with the called party.
19) The AS detects that the caller's identity is present in the incoming baring black-list.
20) The communication is rejected with a SIP response 435 and default reason "Malicious Communication Disallowed".

An exemplary target name space for this new MIME is:
targetNamespace=http://uri.etsi.org/ngn/params/xml/simservs/mcr
whilst an example MIME schema is as follows:

```
 <?xml version="1.0" encoding="UTF-8"?>
 <xs:schema xmlns:xs="http://www.w3.org/2001/XMLSchema"
 xmlns="http://uri.etsi.org/ngn/params/xml/simservs/mcr"
 targetNamespace="http://uri.etsi.org/ngn/params/xml/simservs/mcr"
 elementFormDefault="qualified">
       <xs:annotation>
              <xs:documentation>XML Schema Definition for the mcr request-to mark
 current communications as malicious </xs:documentation>
       </xs:annotation>
       <!--Definition of simple types-->
       <xs:impleType name="IntegerType">
              <xs:restriction base="xs:string">
                     <xs:pattern value="[1-1]"/>
              </xs: restriction>
       </xs:simpleType>
              <xs:element name="mcr">
              <xs:complexType>
                     <xs:attribute name="McrRequestlndicator" type="IntegerType"/>
              </xs:complexType>
       </xs:element> </xs:schema>
```

To have the ability to mark one of the last n communications as malicious during any ongoing communication, then the pattern <xs:pattern value="[1-1]"/> in the MIME schema may be extended to: <xs:pattern value="[1-*n*]"/>, where n is the number of last communications

The following is an example of an instance for the above MIME schema, where the *McrRequestlndicator* value is set to "1" to mark the current communication as malicious, placing it in the incoming barring black-list or grey-list:
<?xml version="1.0" encoding="UTF-8"?> <mcr McrRequestlndicator="1" xsi:chemaLocation="http://uri.etsi.org/ngn/params/xml/simservs/mcr untitled3.xsd" xmlns="http://uri.etsi.org/ngn/params/xml/simservs/mcr" xmlns:xsi="http://www.w3.org/2001/XMLSchema-instance"/>

Returning now to a scenario in which a circuit switched user accesses IMS services via a gateway and a call is ongoing, this user may mark one of his or her last n communications or a current active communication by using the Subsequent Address Message (SAM) [3GPP TR 29.162 "interworking between the IM CN subsystem and IP networks" (Release 9)], with the user dialling the SSC codes. The MGCF/AGCF functionality is extended to convert SAM messages with SSC codes (e.g. *571*#) to SIP INVITE with SSCs. This can be applied to any legacy terminal for any IMS service.

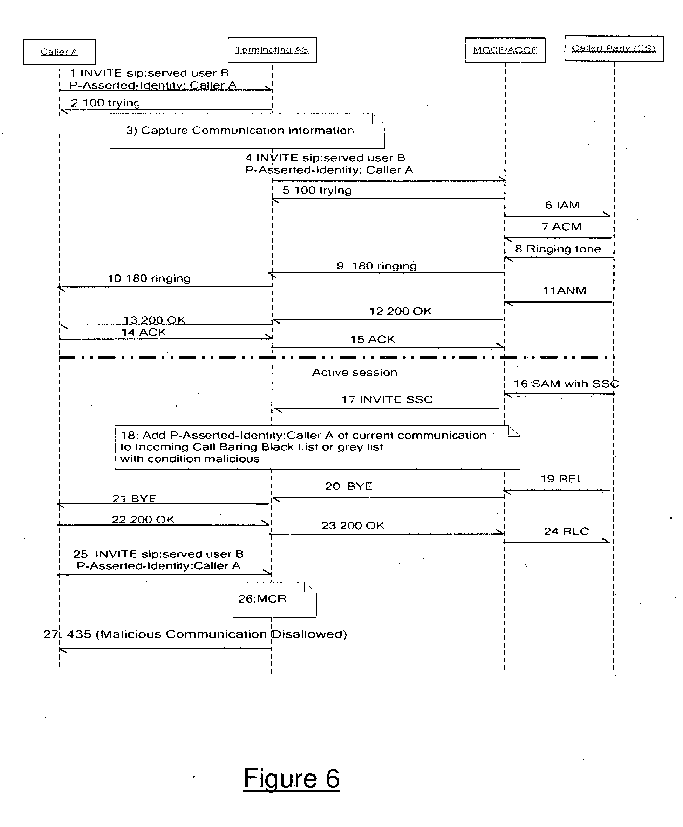

Figure 6 illustrates this process, where the following steps are of particular interest:
16. During active communications, the Called CS user sends an SSC as detailed above in order to mark the communication as malicious, using a SAM command.
17. The MGCF/AGCF coverts the SAM message into an INVITE with SSC.
18. The terminating user's Application Server adds the P-Asserted-Identity of the caller into the incoming black-grey list.
19. The called Party issues a REL (Release) command to end the call. 20-21. BYE
22-23. 200 OK to BYE
24. The MGCF/AGCF sends a RLC (Release Complete) to the called user.
25. Caller A again makes an attempt at communication
26. The AS detects that the caller is present in the incoming barring black list MCR.
27. The communication is rejected with a SIP response 435 and default reason "Malicious Communication Disallowed".

In the case of a CS user not involved in an ongoing call, the user needs to pick up the phone and enter the SSC code.

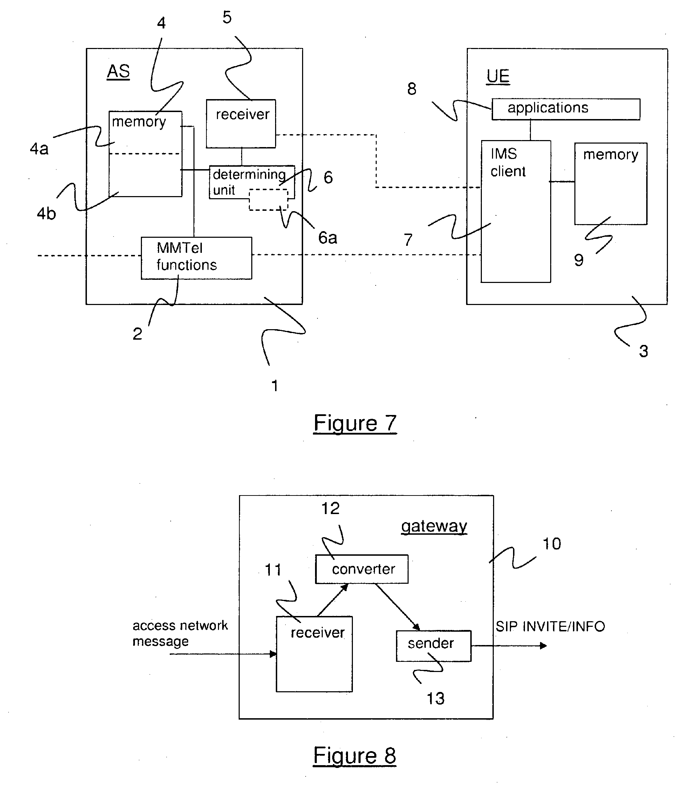

Figure 7 illustrates schematically an IMS Application Server (AS) 1 configured, for example, as an MMTeI AS. The AS 1 comprises hardware and software 2 for implementing conventional MMTeI functionality including that for handling incoming communication requests for a served user possessing a UE 3. This includes means for provisioning the ICB service. The AS also comprises a memory 4 having a part 4a for storing a malicious call rejection (MCR) black-list as described above, as well as a part 4b for storing, for each served user, a chronologically ordered list of caller identities from which incoming communication requests have been received. A receiver 5 is configured to receive from served users (including those with an I MS client and those behind an appropriate gateway) SIP messages including a list position. A determining unit 6 accesses the memory part 4b in order to determine, for each received message, a caller identity matching the identified list position The determining unit 6 also functions as a connection blocking list manager 6a, and passes any determined caller identity to the memory part 4a for inclusion in the served user's MCR black-list.

The illustrated UE 3 includes an IMS client 7 possessing conventional functionality, including functionality for interacting with various user applications 8. In addition, the IMS client 6 has functionality for constructing SIP messages including, within their payloads, list positions identifying caller identities to be added to (or deleted from) the served user's MCR black list. The UE comprises a memory 9 storing an incoming call history list including, where available, caller identities. This list is chronologically ordered according to the times of receipt of the requests. The list may be accessed by the user to assist in recalling positions in the list (held by the AS) when the user wishes to identify a position to the AS. Alternatively, when a user selects a caller identity from the history log, the IMS client may automatically generate the position for inclusion in the SIP INVITE or INFO message.

Figure 8 illustrates a computer 10 configured to act as gateway between a non-Session Initiation Protocol, SIP, access network and an IP Multimedia Subsystem network in order to allow user terminals attached to said access network to participate in IP Multimedia Subsystem enabled services. This gateway might be, for example, a MGCF or AGCF. The computer comprises a receiver 11 for receiving from user terminals, messages configured according to access network protocols and each message containing a position within a connection history list of the sending user terminal, the connection history list being a chronologically ordered record of incoming connection requests. A converter 12 converts each received message into a SIP message whilst preserving the position contained within the received message, whilst a sender 13 sends the converted SIP messages to an application server of the IP Multimedia Subsystem network.

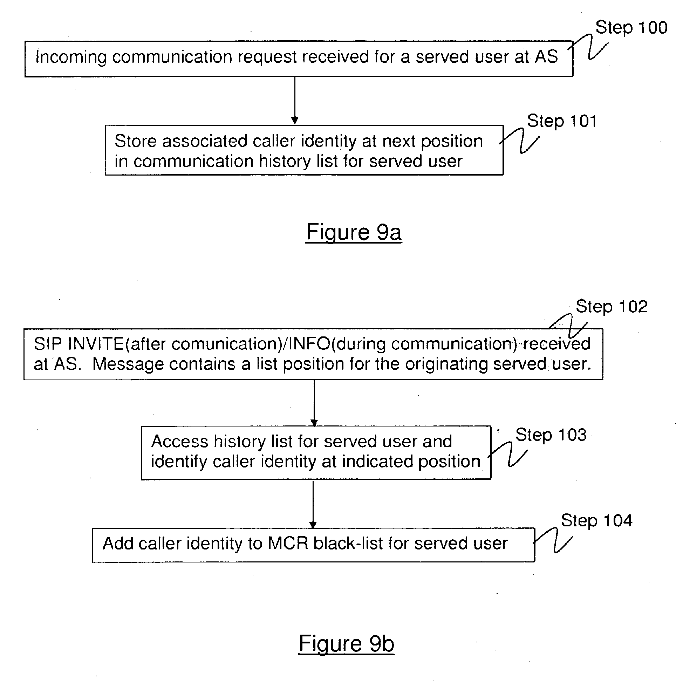

Figures 9a and 9b together present a flow diagram illustrating at steps 100 and 101 the process of adding a caller identity, associated with an incoming communication request directed to a served user, to the black-list of the served user. Steps 102 to 104 illustrate the black-list management process where the served user sends a message towards the AS identifying a caller identity by way of a position within a history list.

Interaction of the proposed MCR service with the ACR service should be considered. However, it can be expected that any MCR blacklist will take priority over a setting to allow incoming, anonymous calls. Thus, if a calling party's identity is included in the MCR black list and the incoming call request indicates that the caller is anonymous, even if the served user has a setting to allow anonymous calls, the AS will block the call. Rules must also be defined to handle the case where a caller identity is included both in a black list/grey list and in a white list. For example, the black list/grey list may be defined as taking priority over the white list.

It will be appreciated that this proposal for storage of the last n communications may be useful in supplementary services other than MCR. For example, the mechanism may be employed in the call diversion service to allow a served user to assign a particular call diversion to a give caller identity.

It will also be appreciate by the person of skill in the art that various modifications may be made to the above described embodiments without departing from the scope of the present invention. For example, as well as, or as an alternative to, applying the approach to add caller identities to a black-list (visible to served users) and/or a grey-list (invisible to served users), the approach may be applied to add caller identities to a white-list, i.e. a list of caller identities from which incoming connection requests are automatically routed to the served user, whilst incoming requests from other calling identities are blocked. The approach may be used to remove caller identities from lists as well as add them.

## Claims

1. An application server (1) adapted to use in a malicious communication identification service, MCID, of an IP Multimedia Subsystem network, the application server adapted to use in provisioning a service to a set of served users, the application server comprising:
a memory (4) configured to store, for each of said served users, a calling party identity for each of a plurality of recently received incoming communication connection requests directed to the served user, the identities forming a connection history list ordered chronologically according to the time of the respective requests;
said application server **characterised by** comprising:
a receiver (5) for receiving from served users and/or from a gateway (10) or gateways providing an interface between served users and the IP Multimedia Subsystem network, Session Initiation Protocol, SIP, messages each relating to a served user and containing a position within the connection history list for the served user; and
a determining unit (6) for determining, for each said message, the calling party identity at said position, said calling party to be added to a malicious connection rejection blacklist.

2. An application server (1) according to claim 1, wherein said memory (4) is further configured to store, for each of said served users, a connection blocking list containing caller identities from which incoming connection requests to the served user are to be blocked, the application server further comprising a connection blocking list manager (6a) responsive to an identification of a calling party identity by said receiver (5) to add that identity to the connection blocking list stored for the associated served user.

3. An application server (1) according to claim 1 or 2, wherein said determining unit (6) is configured to identify within a received SIP message a Supplementary Service Codes (SSC) command including, as an index, said position.

4. An application server (1) according to claim 3, wherein said SIP message is a SIP INVITE message.

5. An application server (1) according to claim 1 or 2, wherein said determining unit (6) is configured to identify within a received SIP message an XML MIME component containing said position.

6. An application server (1) according to claim 5, wherein said SIP message is a SIP INFO message.

7. An application server (1) according to any one of the preceding claims, the application server being an MMTel application server.

8. A user terminal (3) adapted to use in a malicious communication identification service (MCID) for use with an IP Multimedia Subsystem network, the terminal **characterised by** comprising an IP Multimedia Subsystem client (7) configured to construct a Session Initiation Protocol message including a position within a connection history list of the user terminal, the connection history list being a chronologically ordered record of incoming connection requests, and to send the Session Initiation Protocol request to said IP Multimedia Subsystem network to allow the network to determine a caller identity associated with the identified incoming connection request, said caller identity to be added to a malicious connection rejection blacklist.

9. A user terminal (3) according to claim 8, said IP Multimedia Subsystem client (7) being configured to identify said position within the Session Initiation Protocol message by including the position as a Supplementary Services Code command or within an XML MIME.

10. A user terminal (3) according to claim 8 or 9, wherein said Session Initiation Protocol message is an INVITE message in the case that the message is constructed and sent while no connection is ongoing, and is an INFO message in the case that a connection is ongoing.

11. A method of enabling served users to identify caller identities to an application server (1) configured for use in a malicious communication identification service (MCID) of an IP Multimedia Subsystem network, the method comprising:
Storing (101) at the application server (1), for each of said served users, a calling party identity for each of a plurality of recently received incoming communication connection requests directed to the served user, the identities forming a connection history list ordered chronologically according to the time of the respective requests;
the method **characterised by** comprising:
Receiving (102) at the application server, from served users and/or from a gateway (10) or gateways providing an interface between served users and the IP Multimedia Subsystem network, Session Initiation Protocol, SIP, messages each relating to a served user and containing a position within the connection history list for the served user; and
at the application server, determining for each said message the calling party identity at said position, said caller identity to be added to a malicious connection rejection blacklist.

12. A method according to claim 11 and comprising, at a user terminal of a served user, sending a Supplementary Services Codes command, containing a said position for the served user to a gateway node of the IP Multimedia Subsystem network, at the gateway node, including the Supplementary Services Codes command as a payload in a SIP INVITE message, and sending the SIP INVITE message to said application server.

13. A method according to claim 11, wherein said SIP messages are either SIP INVITE messages or SIP INFO messages.

14. A method of managing communications barring lists for respective served users at an application server configured for use in a malicious communication identification service (MCID) of an IP Multimedia Subsystem network, the method comprising using the method of any one of claims 11 to 13 to identify (103) a caller identity to be added to and/or deleted from a communications barring list of a served user.

15. A method according to claim 14, the method being an extension of the IP Multimedia Subsystem Incoming Communications Barring service.

## Patentansprüche

1. Anwendungsserver (1), ausgerichtet zur Anwendung in einem Dienst zur Identifikation von böswilliger Kommunikation (MCID) eines IP Multimedia Subsystemnetzwerks, wobei der Anwendungsserver zum Anwenden beim Bereitstellen eines Dienstes für eine Reihe von bedienten Benutzern ausgerichtet ist, wobei der Anwendungsserver umfasst:
einen Speicher (4), konfiguriert zum Speichern für jeden der bedienten Benutzer einer Anruferidentität für jede einer Mehrzahl von vor Kurzem eingegangenen, an den bedienten Benutzer gerichteten Kommunikationsverbindungsanfragen, wobei die Identitäten eine Liste des Verbindungsverlaufs bilden, die je nach Zeitpunkt der jeweiligen Anfragen chronologisch geordnet ist,
wobei der Anwendungsserver **dadurch gekennzeichnet ist, dass** er umfasst:
eine Empfangsvorrichtung (5) zum Empfangen von Session-Initiation-Protocol (SIP)-Nachrichten, von denen jede einen bedienten Benutzer betrifft und eine Position für den bedienten Benutzer innerhalb der Liste des Verbindungsverlaufs enthält, von bedienten Benutzern und/oder von einem Gateway (10) oder Gateways, die eine Schnittstelle zwischen den bedienten Benutzern und dem IP-Multimedia-Subsystemnetzwerk bereitstellen; und
eine Bestimmungseinheit (6) zum Bestimmen der Anruferidentität für jede Nachricht in der jeweiligen Position, wobei der Anrufer einer schwarzen Liste für Zurückweisung von böswilligen Verbindungen hinzugefügt werden soll.

2. Anwendungsserver (1) nach Anspruch 1, wobei der Speicher (4) des Weiteren konfiguriert ist, für jeden der bedienten Benutzer eine Verbindungssperrliste zu speichern, die Anruferidentitäten umfasst, für die eingehende Verbindungsanfragen an den bedienten Benutzer gesperrt werden sollen, wobei der Anwendungsserver des Weiteren eine Verwaltungsvorrichtung für die Verbindungssperrliste (6a) umfasst, die auf die Identifikation einer Anruferidentität durch die Empfangsvorrichtung (5) reagiert, um diese Identität zu der Verbindungssperrliste hinzuzufügen, die für den betreffenden bedienten Benutzer gespeichert ist.

3. Anwendungsserver (1) nach Anspruch 1 oder 2, wobei die Bestimmungseinheit (6) konfiguriert ist, innerhalb einer erhaltenen SIP-Nachricht eine Supplementary-Service-Codes-(SSC-) Anweisung zu identifizieren, die die Position als Kennziffer umfasst.

4. Anwendungsserver (1) nach Anspruch 3, wobei die SIP-Nachricht eine SIP-INVITE-Nachricht ist.

5. Anwendungsserver (1) nach Anspruch 1 oder 2, wobei die Bestimmungseinheit (6) konfiguriert ist, innerhalb einer empfangenen SIP-Nachricht eine XML-MIME-Komponente zu identifizieren, die die Position umfasst.

6. Anwendungsserver (1) nach Anspruch 5, wobei die SIP-Nachricht eine SIP-INFO-Nachricht ist.

7. Anwendungsserver (1) nach einem der vorgehenden Ansprüche, wobei der Anwendungsserver ein MMTel-Anwendungsserver ist.

8. Benutzerterminal (3), ausgerichtet zur Anwendung in einem Dienst zur Identifikation von böswilliger Kommunikation (MCID) zur Anwendung mit einem IP-Multimedia-Subsystemnetzwerk, wobei der Terminal **dadurch gekennzeichnet ist, dass** er umfasst: einen IP-Multimedia-Subsystem-Client (7), konfiguriert zum Konstruieren einer Session-Initiation-Protocol-Nachricht, aufweisend eine Position innerhalb einer Liste des Verbindungsverlaufs des Benutzerterminals, wobei die Liste des Verbindungsverlaufs eine chronologisch geordnete Aufzeichnung von eingehenden Verbindungsanfragen ist, und konfiguriert zum Senden der Session-Initiation-Protocol-Anfrage an das IP-Multimedia-Subsystemnetzwerk, um es dem Netzwerk zu ermöglichen, eine Anruferidentität zu bestimmen, die der identifizierten eingehenden Verbindungsanfrage zugeordnet ist, wobei die Anruferidentität einer schwarzen Liste für eine Zurückweisung von böswilligen Verbindungen hinzugefügt werden soll.

9. Benutzerterminal (3) nach Anspruch 8, wobei der IP-Multimedia-Subsystem-Client (7) konfiguriert ist, die Position innerhalb der Session-Initiation-Protocol-Nachricht zu identifizieren, indem die Position als eine Supplementary-Service-Code-Anweisung oder innerhalb eines XML MIME aufgenommen wird.

10. Benutzerterminal (3) nach Anspruch 8 oder 9, wobei die Session-Initiation-Protocol-Nachricht in dem Fall, in dem die Nachricht gestaltet und abgesendet wird, während keine laufende Verbindung besteht, eine INVITE-Nachricht ist und in dem Fall, in dem eine laufende Verbindung besteht, eine INFO-Nachricht ist.

11. Verfahren, um es bedienten Benutzern zu ermöglichen, Anruferidentitäten eines Anwendungsservers (1) zu identifizieren, der für die Anwendung in einem Dienst zur Identifikation von böswilliger Kommunikation (MCID) eines IP-Multimedia-Subsystemnetzwerks konfiguriert ist, wobei das Verfahren umfasst:
Speichern (101) für jeden der bedienten Benutzer im Anwendungsserver (1) einer Anruferidentität für jede einer Mehrzahl von vor Kurzem eingegangenen, an den bedienten Benutzer gerichteten Kommunikationsverbindungsanfragen, wobei die Identitäten eine Liste des Verbindungsverlaufs bilden, die je nach Zeitpunkt der jeweiligen Anfragen chronologisch geordnet ist,
wobei das Verfahren **dadurch gekennzeichnet ist, dass** es umfasst:
Empfangen (102) im Anwendungsserver von Session-Initiation-Protocol (SIP-) Nachrichten, von denen jede einen bedienten Benutzer betrifft und eine Position für den bedienten Benutzer innerhalb der Liste des Verbindungsverlaufs enthält, von bedienten Benutzern und/oder von einem Gateway (10) oder Gateways, die eine Schnittstelle zwischen den bedienten Benutzern und dem IP-Multimedia-Subsystemnetzwerk bereitstellen; und
Bestimmen der Anruferidentität für jede Nachricht in der jeweiligen Position im Anwendungsserver, wobei die Anruferidentität einer schwarzen Liste für eine Zurückweisung von böswilligen Verbindungen hinzugefügt werden soll.

12. Verfahren nach Anspruch 11 und umfassend das Senden in einem Benutzerterminal eines bedienten Benutzers einer Supplementary-Services-Codes-Anweisung, enthaltend eine Position für den bedienten Benutzer zu einem Gateway-Knoten des IP-Multimedia-Subsystemnetzwerks am Gateway-Knoten, einschließlich der Supplementary-Services-Codes-Anweisung als eine Nutzlast in einer SIP-INVITE-Nachricht, und das Senden der SIP-INVITE-Nachricht an den Anwendungsserver.

13. Verfahren nach Anspruch 11, wobei die SIP-Nachrichten entweder SIP-INVITE-Nachrichten oder SIP-INFO-Nachrichten sind.

14. Verfahren zum Verwalten von Kommunikationssperrlisten für jeweilige bediente Benutzer in einem Anwendungsserver, der zur Anwendung in einem Dienst zur Identifikation von böswilliger Kommunikation (MCID) eines IP-Multimedia-Subsystemnetzwerks konfiguriert ist, wobei das Verfahren das Anwenden des Verfahrens nach einem der Ansprüche 11 bis 13 umfasst, um eine Anruferidentität zu identifizieren (103), die einer Kommunikationssperrliste eines bedienten Benutzers hinzugefügt und/oder von dieser gelöscht werden soll.

15. Verfahren nach Anspruch 14, wobei das Verfahren eine Erweiterung des IP-Multimedia-Subsystem-Dienstes zum Sperren von eingehender Kommunikation ist.

## Revendications

1. Serveur d'applications (1) apte à être utilisé dans le cadre d'un service d'identification de communications malveillantes, MCID, d'un réseau de sous-système multimédia IP, le serveur d'applications étant apte à être utilisé dans le cadre du provisionnement d'un service à un ensemble d'utilisateurs desservis, le serveur d'applications comprenant :
une mémoire (4) configurée de manière à stocker, pour chacun desdits utilisateurs desservis, une identité de partie appelante pour chacune d'une pluralité de demandes de connexion de communications entrantes récemment reçues dirigées vers l'utilisateur desservi, les identités formant une liste d'historiques de connexions ordonnée chronologiquement selon l'heure des demandes respectives ;
ledit serveur d'applications étant **caractérisé en ce qu'**il comporte :
un récepteur (5) destiné à recevoir, en provenance d'utilisateurs desservis et/ou en provenance d'une passerelle (10) ou de passerelles fournissant une interface entre des utilisateurs desservis et le réseau de sous-système multimédia IP, des messages de protocole d'ouverture de session, SIP, qui sont chacun connexes à un utilisateur desservi et qui contiennent une position au sein de la liste d'historiques de connexions pour l'utilisateur desservi ; et
une unité de détermination (6) destinée à déterminer, pour chaque dit message, l'identité de partie appelante au niveau de ladite position, ladite partie appelante devant être ajoutée à une liste noire de rejet de connexions malveillantes.

2. Serveur d'applications (1) selon la revendication 1, dans lequel ladite mémoire (4) est en outre configurée de manière à stocker, pour chacun desdits utilisateurs desservis, une liste de blocage de connexions contenant des identités d'appelants à partir desquelles des demandes de connexions entrantes à destination de l'utilisateur desservi doivent être bloquées, le serveur d'applications comprenant en outre un gestionnaire de liste de blocage de connexions (6a) répondant à une identification d'une identité de partie appelante par ledit récepteur (5) pour ajouter cette identité à la liste de blocage de connexions stockée pour l'utilisateur desservi associé.

3. Serveur d'applications (1) selon la revendication 1 ou 2, dans lequel ladite unité de détermination (6) est configurée de manière à identifier, au sein d'un message de protocole SIP reçu, une commande de codes de complément de services (SSC), incluant, sous la forme d'un indice, ladite position.

4. Serveur d'applications (1) selon la revendication 3, dans lequel ledit message de protocole SIP est un message d'invitation « SIP INVITE ».

5. Serveur d'applications (1) selon la revendication 1 ou 2, dans lequel ladite unité de détermination (6) est configurée de manière à identifier, au sein d'un message de protocole SIP reçu, une composante XML MIME contenant ladite position.

6. Serveur d'applications (1) selon la revendication 5, dans lequel ledit message de protocole SIP est un message d'information « SIP INFO ».

7. Serveur d'applications (1) selon l'une quelconque des revendications précédentes, dans lequel le serveur d'applications est un serveur d'applications MMTel.

8. Terminal d'utilisateur (3) apte à être utilisé dans un service d'identification de communications malveillantes (MCID) destiné à être utilisé avec un réseau de sous-système multimédia IP, le terminal étant **caractérisé en ce qu'**il comporte un dispositif client de sous-système multimédia IP (7) configuré de manière à construire un message de protocole d'ouverture de session incluant une position au sein d'une liste d'historiques de connexions du terminal d'utilisateur, la liste d'historiques de connexions correspondant à un enregistrement, dans l'ordre chronologique, de demandes de connexions entrantes, et à envoyer la demande de protocole d'ouverture de session audit réseau de sous-système multimédia IP en vue de permettre au réseau de déterminer une identité d'appelant associée à la demande de connexion entrante identifiée, ladite identité d'appelant devant être ajoutée à une liste noire de rejet de connexions malveillantes.

9. Terminal d'utilisateur (3) selon la revendication 8, dans lequel ledit dispositif client de sous-système multimédia IP (7) est configuré de manière à identifier ladite position au sein du message de protocole d'ouverture de session, en incluant la position, sous la forme d'une commande de code de complément de service, ou au sein d'une composante MIME XML.

10. Terminal d'utilisateur (3) selon la revendication 8 ou 9, dans lequel ledit message de protocole d'ouverture de session est un message d'invitation « INVITE », dans le cas où le message est construit et envoyé alors qu'aucune connexion n'est en cours, et est un message d'information « INFO », dans le cas où une connexion est en cours.

11. Procédé destiné à permettre à des utilisateurs desservis d'identifier des identités d'appelants auprès d'un serveur d'applications (1) configuré de manière à être utilisé dans un service d'identification de communications malveillantes (MCID) d'un réseau de sous-système multimédia IP, le procédé comprenant l'étape ci-dessous consistant à :
stocker (101), au niveau du serveur d'applications (1), pour chacun desdits utilisateurs desservis, une identité de partie appelante pour chacune d'une pluralité de demandes de connexion de communications entrantes récemment reçues dirigées vers l'utilisateur desservi, les identités formant une liste d'historiques de connexions ordonnée chronologiquement selon l'heure des demandes respectives ;
le procédé étant **caractérisé en ce qu'**il comporte les étapes ci-dessous consistant à :
recevoir (102), au niveau du serveur d'applications, en provenance d'utilisateurs desservis et/ou en provenance d'une passerelle (10) ou de passerelles fournissant une interface entre des utilisateurs desservis et le réseau de sous-système multimédia IP, des messages de protocole d'ouverture de session, SIP, qui sont chacun connexes à un utilisateur desservi et qui contiennent une position au sein de la liste d'historiques de connexions pour l'utilisateur desservi ; et
au niveau du serveur d'applications, déterminer, pour chaque dit message, l'identité de partie appelante au niveau de ladite position, ladite identité d'appelant devant être ajoutée à une liste noire de rejet de connexions malveillantes.

12. Procédé selon la revendication 11, comprenant les étapes ci-après consistant à, au niveau d'un terminal d'utilisateur d'un utilisateur desservi, envoyer une commande de codes de complément de services, contenant une dite position de l'utilisateur desservi, à un noeud de passerelle du réseau de sous-système multimédia IP, au niveau du noeud de passerelle, inclure la commande de codes de complément de services sous la forme d'une charge utile, dans un message d'invitation « SIP INVITE », et envoyer le message d'invitation « SIP INVITE » audit serveur d'applications.

13. Procédé selon la revendication 11, dans lequel lesdits messages de protocole SIP sont soit des messages d'invitation « SIP INVITE », soit des messages d'information « SIP INFO ».

14. Procédé de gestion de listes d'interdiction de communications pour des utilisateurs desservis respectifs au niveau d'un serveur d'applications configuré de manière à être utilisé dans un service d'identification de communications malveillantes (MCID) d'un réseau de sous-système multimédia IP, le procédé comprenant l'utilisation du procédé selon l'une quelconque des revendications 11 à 13 en vue d'identifier (103) une identité d'appelant à ajouter à et/ou à supprimer d'une liste d'interdiction de communications d'un utilisateur desservi.

15. Procédé selon la revendication 14, dans lequel le procédé correspond à une extension du service d'interdiction de communications entrantes de sous-système multimédia IP.
